Europäisches Patentamt

European Patent Office

Office européen des brevets

(11) Veröffentlichungsnummer: **0 246 250 B1**

(12) **EUROPÄISCHE PATENTSCHRIFT**

(45) Veröffentlichungstag der Patentschrift: 28.11.90

(51) Int. Cl.⁵: **B 29 C 47/82**

(21) Anmeldenummer: 86906256.2

(22) Anmeldetag: 05.11.86

(86) Internationale Anmeldenummer: PCT/CH86/00154

(87) Internationale Veröffentlichungsnummer: WO 87/02617 07.05.87 Gazette 87/10

(54) **HEIZ- UND KÜHLANORDNUNG INSBESONDERE FÜR EINEN EXTRUSIONSZYLINDER.**

(30) Priorität: 05.11.85 CH 4743/85

(43) Veröffentlichungstag der Anmeldung: 25.11.87 Patentblatt 87/48

(45) Bekanntmachung des Hinweises auf die Patenterteilung: 28.11.90 Patentblatt 90/48

(84) Benannte Vertragsstaaten: CH DE FR GB IT LI

(56) Entgegenhaltungen:
FR-A-2 379 221
US-A-2 522 365
US-A-2 541 201
US-A-3 167 812
US-A-3 285 329
US-A-3 722 059
US-A-3 730 262
US-A-3 743 252
US-A-3 933 200
US-A-4 236 578

(73) Patentinhaber: GRÜTER ELEKTROAPPARATE AG
Weingasse 5
CH-8303 Bassersdorf (CH)

(72) Erfinder: KÜHLER, Paul
Rebhaldenstrasse 39
CH-8303 Bassersdorf (CH)

(74) Vertreter: Tschudi, Lorenz et al
Bovard AG Patentanwälte VSP Optingenstrasse 16
CH-3000 Bern 25 (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung bezieht sich auf eine Heiz- und Kühlanordnung, für einen Extrusionszylinder, gemäss dem Oberbegriff des Patentanspruches 1, sowie auf einen Extrusionszylinder mit Heiz- und Kühlanordnungen.

Bei Kunststoff-Extrusionsmaschinen ist es für den Extrusionsprozess wichtig, dass der ganze Extrusionszylinder geheizt oder gekühlt werden kann. Es ist bekannt, zur Erwärmung eines Extrusionszylinders einen Gussteil mit eingegossener Heizung am Umfange desselben vorzusehen. Diese Anordnung hat den Nachteil, dass sie eine grosse zeitliche Trägheit bezüglich Erwärmung und Abkühlung aufweist und keine individuelle Erwärmung und Abkühlung eines Zylinderabschnittes ermöglicht.

Die Heiz- und Kühleinheit gemäss der US-Patentschrift 3 730 262 weist den Nachteil auf, dass sie starre Kühl und Heizelemente umfasst, welche nicht mit optimalem Wärmeübergang an einen Extrusionszylinder angepasst werden können. Die Heiz- und Kühlelemente liegen nebeneinander, so dass an einer bestimmten Stelle des Rohres nicht geheizt oder gekühlt werden kann. Die Wärmeverteilung ist in einem bestimmten Abschnitt nicht homogen über die Zylinderoberfläche.

Die Vorrichtung zur Erhöhung des Wärmeaustausches gemäss der US-Patentschrift 4 236 578 weist keine Heizungselemente auf. Die Heizungselemente müssten neben den Kühlungselementen angeordnet sein. Es würde also an einer bestimmten Stelle des Rohres lediglich Heizung oder Kühlung stattfinden können. Die Anordnung gemäss dieser Druckschrift kann ebenfalls nicht optimal an einen gegebenen Zylinder angepasst werden. Bei der starren Ausführung gemäss dieser wie auch der obgenannten Druckschrift ergibt sich eventuell ein kleiner Abstand zwischen Mantel und Rohr, was den Wärmeübergang sehr verschlechtert. Es wird eine sehr genaue Bearbeitung des Mantels erforderlich, damit ein guter Wärmeübergang gewährleistet wird. Die Wärmeleitung wäre beispielsweise nicht gewährleistet, wenn die Wärmeelemente unter den Kühlelementen angeordet werden, da die Heizdrähte isoliert sein mussen.

Der luftgekühlte Extruder gemäss der US-Patentschrift 3 743 252 weist ebenfalls den Nachteil auf, dass die Kühlanordnung starr ist. Die Kühlplatten müssen sehr genau bearbeitet werden.

Die Heiz- und Kühleinheit für Extruder gemäss der US-Patentschrift 3 285 329 ergibt dieselben Probleme wie die Vorrichtung gemäss der US-Patentschrift 3 730 262. Die Vorrichtung ist ebenfalls starr, was eine optimale Anpassung an das Extruderrohr verunmöglicht. Ein guter Wärmeübergang ist nicht gewährleistet. Die Luftkühlung mit Rohren hat auch eine schlechte Wärmeverteilung auf der Zylinderoberfläche zur Folge.

Es ist eine Aufgabe der vorliegenden Erfindung, eine Heiz- und Kühlanordnung zu schaffen, mit der einzelne Zylinderabschnitte sowohl gekühlt als auch beheizt werden können. Die Heiz- und Kühlanordnung soll auf einfache Art und Weise einem beliebigen Durchmesser des Extrusionszylinders angepasst werden können.

Dies wird erfindungsgemäss durch die Merkmale des Patentanspruches 1 erzielt.

Im weiteren soll eine optimale Anpassung des Temperaturprofils längs des Extrusionszylinders an jeden Extrusionsprozess individuell ermöglicht werden können.

Dies wird erfindungsgemäss durch die Merkmale des Patentanspruches 4 erzielt.

Durch die erfindungsgemässe Anordnung lässt sich das Temperaturprofil der jeweiligen Prozessgeschwindigkeit anpassen. Es wird ein dynamisches Heiz- und Kühlsystem geschaffen, welches auch für sehr schnelle Extrusionsprozesse geeignet ist. Die Aufheiz- und Kühlprozesse erfolgen viel schneller als bei den bekannten Anordnungen.

Im folgenden wird anhand der beiliegenden Zeichnung ein Ausführungsbeispiel der Erfindung sowie dessen Verwendung näher beschrieben. Es zeigen:

Fig. 1 eine schematische Darstellung eines Extruders mit an diesem vorgesehenen Heiz- und Kühlelementen,

Fig. 2 ein einzelnes Kühlelement im Schnitt und in Draufsicht,

Fig. 3 einen Schnitt durch eine am Extrusionszylinder vorgesehene Heiz- und Kühlanordnung,

Fig. 4 eine perspektivische Ansicht einer auf dem Extrusionszylinder montierten Heiz- und Kühlanordnung,

Fig. 5 eine Ansicht des Extrusionszylinders mit an seinem gesamten Umfang angeordneten Kühlelementen und einem Heizelement.

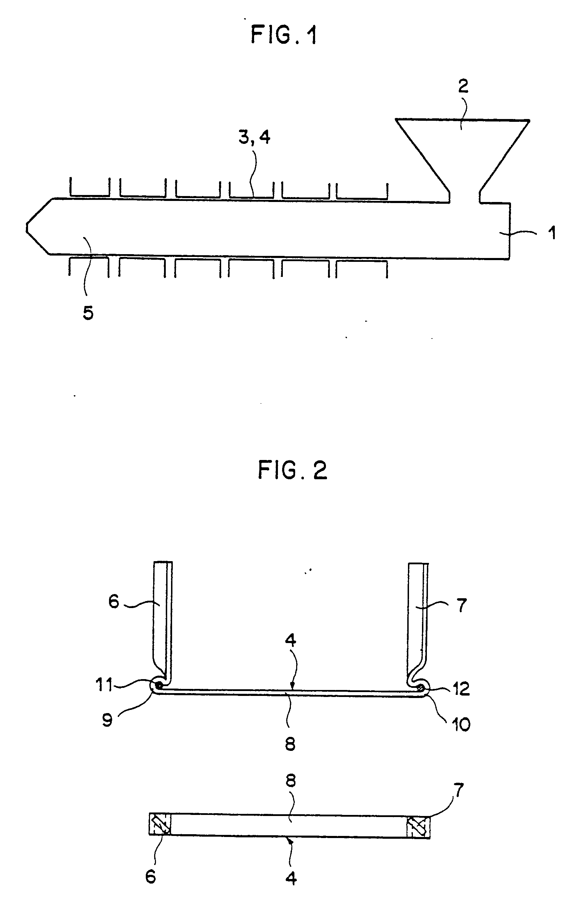

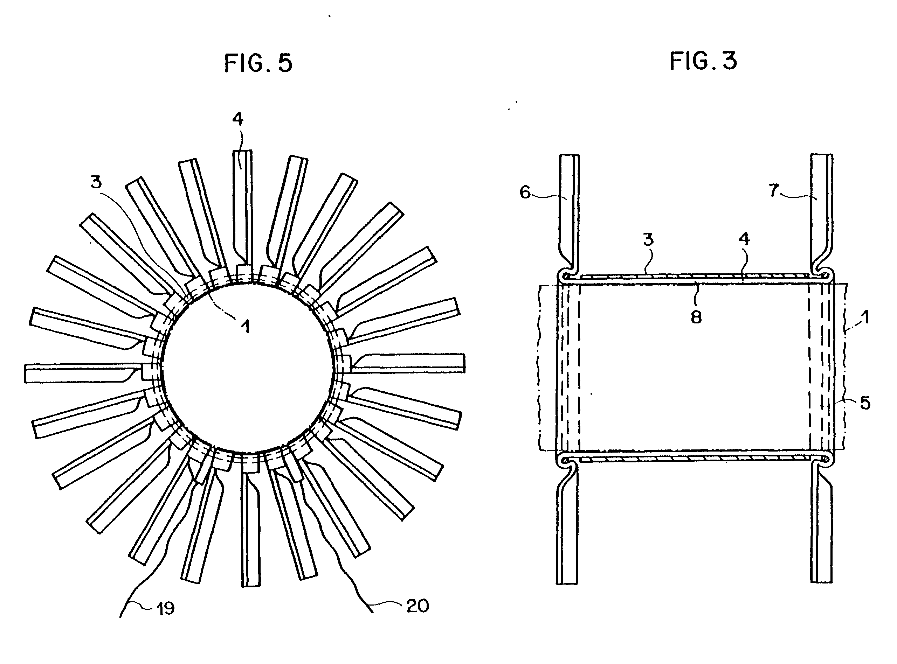

In Fig. 1 ist schematisch der Extrusionszylinder 1 mit einem Trichter 2 dargestellt. Am Umfang des Extrusionszylinders 1 sind in regelmässigen, vorzugsweise kleinen Abständen Heiz- und Kühlanordnungen 3 und 4 vorgesehen. An einem einzelnen Abschnitt 5 des Extrusionszylinders 1 sind jeweils mehrere in regelmässigen, vorzugsweise kleinen Abständen über den ganzen Umfang des Zylinders verteilte Kühlelemente sowie ein bandförmiges Heizelement vorgesehen.

In Fig. 2 ist ein Kühlelement 4 im Schnittund in Draufsicht dargestellt. Das Kühlelement 4 ist aus einem Stück gefertigt, wobei die Enden als Schenkel 6 und 7 rechtwinklig zum Mittelteil 8 abgebogen und zur mechanischen Stabilisierung in Richtung ihrer Längsachse noch um 45° verdreht werden. In den Uebergangsbereichen 9 und 10 vom Mittelteil 8 zu den Schenkeln 6 und 7 weist das Kühlelement 4 je einen gekrümmten Abschnitt 11 und 12 auf. Das Kühlelement wird vorzugsweise aus Kupfer, einem Metall mit einer guten Wärmeleitfähigkeit, hergestellt. Das Kühlelement weist ebenfalls eine geringe Wärmespeicherfähigkeit auf, was bei rasch aufeinanderfolgenden Wärmeund Kühlvorgängen des Extrusionszylinders wichtig ist.

Fig. 3 zeigt einen Schnitt durch eine am Extrusionszylinder 1 vorgesehene Heiz- und Kühlanordnung, wobei von den an einem Abschnitt 5 des Extrusionszylinders radial auf den ganzen Umfang desselben angeordneten Kühlelementen zwei um 180° gegeneinander versetzte Elemente sowie das bandförmige Heizelement 3 ersichtlich sind. Das Heizelement ist ein guter Wärmeisolator und verfügt über eine kleine Wärmespeicherfähigkeit.

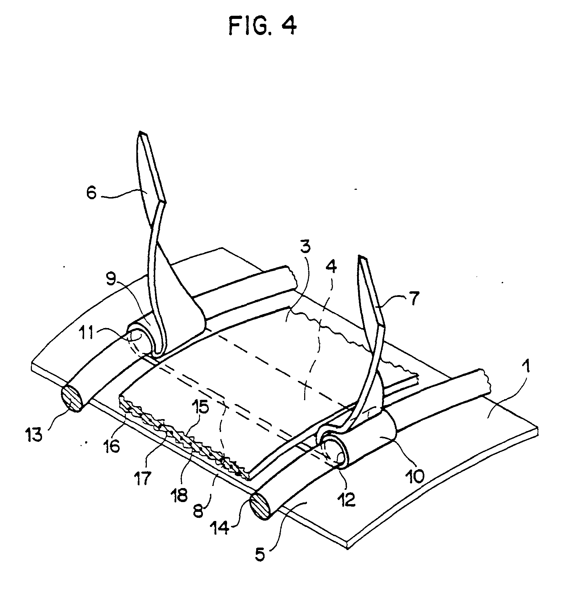

In Fig. 4 ist ein Teil der Heiz- und Kühlanordnung 3, 4 perspektivisch dargestellt. Die Kühlelemente 4, bestehend aus an ihren Enden abgewinkelten Kupferstreifen, werden durch zwei Kupferdrähte 13 und 14 an der Oberfläche des Extrusionszylinders 1 gehalten. Die Kupferdrähte 13 und 14 werden durch die in den Endbereichen 9 und 10 des mittleren Teiles 8 des Kühlelementes gebildeten, gekrümmten Abschnitte 11 und 12 geführt. Sämtliche über den ganzen Umfang eines Abschnittes 5 des Extrusionszylinders angeordneten Kühlelemente 4 werden durch die Kupferdrähte 13 und 14 miteinander verbunden. Das über die einzelnen Kühlelemente 4 gelegte Heizelement 3 ist bandförmig ausgebildet. Es umfasst zwei äussere Bleche 15 und 16, zwischen welchen ein Isolierstoff 17 vorgesehen ist. Innerhalb des hochtemperaturbeständigen Isolierstoffes 17 sind Heizdrähte 18 angeordnet. Das Heizelement 3 kann mit Schrauben am Extrusionszylinder 1 befestigt werden, was auch ein leichtes Auswechseln desselben möglich macht, da das Heizelement einem stärkeren Verschleiss ausgesetzt ist als die Kühlelemente. Das Heizelement ist so ausgebildet und am Extrusionszylinder montiert, dass möglichst wenig Strömungsverluste beim Kühlen entstehen.

Fig. 5 zeigt eine Ansicht des Extrusionszylinders 1 mit über den ganzen Umfang desselben angeordneten, ein Band bildenden Kühlelementen 4 sowie dem bandförmigen Heizelement 3. Zwei Anschlussdrähte 19 und 20 für das Heizelement 3 werden von der Oberfläche des Extrusionszylinders 1 nach aussen geführt Die Kühlluft wird radial auf den Extrusionszylinder geblasen und strömt axial weg.

Die Zahl der Kühl- und/oder Wärmezonen lässt sich je nach Bedarf variieren. Durch die Aneinanderreihung von einzelnen, identischen Kühlelementen kann die Anordnung jedem beliebigen Durchmesser der Extrusionszylinder angepasst werden.

Es könnten anstelle der bandförmig zusammengefügten Kühlelemente auch mehrere stranggepresste Kühlelemente verwendet werden.

Die beschriebene Anordnung hat sich als ein wirksames Mittel erwiesen, um die Anpassung eines Extrusionszylinders im Betrieb an jedes gewünschte Temperaturprofil zu gewährleisten. Jede aus einer Anzahl Kühlelemente und einem Heizelement gebildete Heiz- und Kühlanordnung sorgt für die Erhaltung einer vorbestimmten Temperatur an der Stelle, wo sie um den Zylinder angebracht ist. Sowohl die Kühlelemente als auch die Heizelemente haben einen geringen Wärmespeicherungswert. Die Heizelemente, die nach aussen als Wärmeisolatoren wirken, liegen über den Kupferstreifen der Kühlelemente und bewirken somit, dass die Wärme infolge des unmittelbaren Kontaktes zwischen den Heizelementen, den Kupferstreifen und dem Zylinder direkt in den Zylinder eindringt. Soll eine Kühlung bewirkt werden, so wird das entsprechende Heizelement abgeschaltet. Die Wärme des Zylinders wird dann durch die Schenkel 6 und 7 der Kühlelemente durch Strahlung und Konvektion an die Aussenluft abgegeben.

Wie bei den üblichen Anlagen wird ein axial wirkender Ventilator am Ende des Zylinders eingerichtet, der für die Luftzirkulation sorgt.

## Patentansprüche

1. Heiz- und Kühlanordnung für einen Extrusionszylinder, die aus Heiz- und Kühlelementen (3, 4) besteht, wobei sich die Elemente zumindest teilweise überlappen, dadurch gekennzeichnet, dass die Kühlelemente (4) als Metallstreifen mit in bezug auf einen Mitteilteil (8) abgebogenen Schenkeln (6, 7) ausgebildet sind, und die Kühlelemente (4) zueinander derart angeordnet sind, dass ihre Mittelteile (8) einen Zylindermantel bilden, wobei die Schenkel (6, 7) radial beiderseits der Mittelteile nach aussen abstehen, und über dem durch die Mitteilteile (8) gebildeten Zylindermantel ein bandförmiges Heizelement (3) angeordnet ist.

2. Heiz- und Kühlanordnung nach Patentanspruch 1, dadurch gekennzeichnet, dass die Kühlelemente (4) in den Uebergangsbereichen zwischen dem Mittelteil (8) und den abgebogenen Schenkeln (6, 7) je durch einen Metalldraht verbunden sind.

3. Heiz- und Kühlanordnung nach Patentanspruch 1 oder 2, dadurch gekennzeichnet, dass die Schenkel (6, 7) in Richtung ihrer Längsachse verdreht ausgebildet sind.

4. Extrusionszylinder mit Heizund Kühlanordnungen nach einem der vorangehenden Patentansprüche, dadurch gekennzeichnet, dass die durch die Mittelteile (8) der Kühlelemente (4) gebildeten Zylindermäntel jeweils abschnittweise am Umfang des Extrusionszylinders (1) anliegen.

## Revendications

1. Dispositif de chauffage et de refroidissement d'un cylindre d'extrusion comportant des éléments de chauffage et de refroidissement (3, 4) où les éléments se superposent au moins en partie, caractérisé en ce que les éléments de refroidissement (4) sont constitués de bandes métalliques avec des côtés repliés (6, 7), en recouvrement sur une partie centrale (8), et les éléments de refroidissement (4) sont disposée ainsi entre eux que leurs parties centrales (8) forment un corps de cylindre, les côtés (6, 7) s'éloignant radialement vers l'extérieur des deux côtés des parties centrales, et un élément de chauffage en forme de bande étant disposé au-dessus du corps de cylindre formé par les parties centrales (8).

2. Dispositif de chauffage et de refroidissement selon la revendication 1, caractérisé en ce que les éléments de refroidissement (4) sont reliés chacun par un fil métallique dans les régions de recouvrement entre la partie centrale (8) et les côtés repliés (6, 7).

3. Dispositif de chauffage et de refroidissement selon la revendication 1 ou 2, caractérisé en ce que les côtés (6, 7) sont tordus en direction de leur axe longitudinal.

4. Cylindre d'extrusion avec des dispositifs de chauffage et de refroidissement selon l'une des revendications précédentes, caractérisé en ce que les parties centrales (8) des éléments de chauffage (4) formant corps de cylindre sont serrées, chacune formant partie du périmètre du cylindre d'extrusion.

**Claims**

1. Heating and cooling arrangement for an extrusion cylinder, consisting of heating and cooling elements (3, 4), the elements overlapping each other at least partially, characterized in that the cooling elements (4) are formed as a metal strip with legs (6, 7) which are bent relative to a middle portion (8), and in that the cooling elements (4) are connected to one another in such a way that their middle portions (8) form a cylinder jacket, the legs (6, 7) protruding radially outwards on both sides of the middle portions, and a band-shaped heating element (3) being disposed above the cylinder jacket which is formed by the middle portions (8).

2. Heating and cooling arrangement according to claim 1, characterized in that the cooling elements (4) are each connected by a metal wire in the transition regions between the middle portion (8) and the bent legs (6, 7).

3. Heating and cooling arrangement according to claim 1 or 2, characterized in that the legs (6, 7) are formed twisted in the direction of the longitudinal axis.

4. Extrusion cylinder with heating and cooling arrangements according to one of the preceding claims, characterized in that the cylinder jackets formed by the middle portions (8) of the cooling elements (4) each lie at intervals along the periphery of the extrusion cylinder.

## FIG. 1

## FIG. 2

FIG. 5

FIG. 3

EP 0 246 250 B1

FIG. 4